# EUROPÄISCHE PATENTSCHRIFT

(11) **EP 0 739 801 B1**
(45) Veröffentlichungstag und Bekanntmachung des Hinweises auf die Patenterteilung: **19.05.1999**
(21) Anmeldenummer: 96100933.9
(22) Anmeldetag: 24.01.1996
(51) Int. Cl.: B61H 7/08

(54) **Magnetische Bremse, insbesondere lineare Wirbelstrombremse**
Magnetic brake, especially linear eddy current brake
Frein magnétique, notamment frein linéaire à courants de Foucault

(30) Priorität: 28.04.1995 DE 19515070
(43) Veröffentlichungstag der Anmeldung: 30.10.1996
(73) Patentinhaber: KNORR-BREMSE Systeme für Schienenfahrzeuge GmbH, 80809 München (DE)
(72) Erfinder: Graf, Thomas, D-86633 Neuburg/Do. (DE)

(56) Entgegenhaltungen:
- EP-A- 0 447 771
- FR-A- 2 098 116

## Beschreibung

Die Erfindung betrifft eine magnetische Bremse, insbesondere eine lineare Wirbelstrombremse für Schienenfahrzeuge, nach dem Oberbegriff des Anspruches 1. Den Wirbelstrombremsen wird in neuerer Zeit - insbesondere im Rahmen der Weiterentwicklung von Hochgeschwindigkeitszügen - erhöhte Aufmerksamkeit zugewandt, denn da sie die Schiene beim Bremsen nicht berühren, sind sie praktisch verschleißfrei. Ein weiterer Vorteil der Wirbelstrom-Schienenbremsen besteht darin, daß ihre Bremskraft unabhängig vom Haftwert zwischen Rad und Schiene ist.

Eine kurze Einführung in die Technologie der Wirbelstrombremsen für Schienenfahrzeuge - deren Funktion auf dem Induktionsgesetz basiert - findet sich beispielsweise in dem Buch von Saumweber et al "AET - Archiv für Eisenbahntechnik, Hestra-Verlag, Bd. 43, Kap. 2.5.2". Wirbelstrombremsen bestehen danach aus einem Eisenjoch mit mehreren Polkernen. Elektrische Spulen erregen die Bremse magnetisch derart, daß alternierend magnetische Nord- und Südpole entstehen. Bei Bewegung der erregten Wirbelstrombremse über die Schiene - d.h. bei einer Bremsung - ergeben sich durch die zeitlichen Flußänderungen elektromagnetische Felder und Wirbelströme. Das sekundäre, durch die Wirbelströme hervorgerufene, Magnetfeld ist dem Magnetfeld der Bremse entgegengerichtet. Die sich daraus ergebende, entgegengesetzt zur Fahrtrichtung wirkende, horizontale Kraftkomponente ist die Bremskraft.

Im Gegensatz zur Magnetschienenbremse berührt die lineare Wirbelstrombremse bei einer Bremsung nicht die Schiene, sondern sie wird in eine Höhe von etwa 7 mm oberhalb der Schiene gehalten. Die Bremse wird im allgemeinen in etwa gleicher Weise wie die Magnetschienenbremse in ein Drehgestell eingebaut. Um den Abstand der Bremse zur Schiene konstant einhalten zu können, müssen sich die Bremsen jedoch über einen Bremsträger an einem ungefederten Teil des Drehgestells - z.B. auf den Radlagern - abstützen. Dabei wird das Magnetjoch der Bremse an einem Bremsträger befestigt, der wiederum mit dem Drehgestell verbunden ist. Eine derartige Anordnung zeigt z.B. die DE-A-26 14 298. Die Schrift zeigt beidseits der Radsätze unter dem Drehgestellrahmen angeordnete Träger zur Halterung der Wirbelstrombremse. Die parallel zur Schiene ausgerichteten Träger sind an ihrer unteren Seite mit Bremsmagneten versehen, die über eine Hubzylinderbetätigung zusammen mit dem Bremsträger in die Nähe der Schiene und von dieser weg bewegt werden können.

Nach einem weiteren internen Stand der Technik der Anmelderin wird der Rahmen, an dem die Bremsmagnete befestigt sind, in Bremsstellung auf feste Widerlager, die an einem ungefederten Rahmenteil (z.B. ein Koppelrahmen) befestigt sind, abgesenkt.

Die Widerlager sind bei diesem Stand der Technik als Prismenführung ausgebildet, so daß sich die Bremse in X-Richtung gegenüber dem Koppelrahmen verschieben läßt. Zur Übertragung der Bremskraft sowie zur Führung der Bremse in X-und Y-Richtung in der Zwischenstellung zwischen Brems- und Lösestellung sind Mitnehmeranschläge vorgesehen, wie sie auch bei Magnetschienenbremsen eingesetzt werden. Problematisch sind das hohe Gewicht und die Vereisungsgefahr, die zum Ausfall der Bremse führen kann.

Eine gattungsgemäße magnetische Bremse - eine Wirbelstrombremse - ist aus der EP-A-0 447 771 bekannt. Wünschenswort ist eine verbesserte Einweisung der Bremse beim Absenken.

Die Erfindung zielt daher darauf ab, die Aufhängetechnik der gattungsgemäßen Bremsen im Richtung auf ein sichereres Einweisen der Bremse beim Absenken zu verbessern.

Die Erfindung erreicht dieses Ziel durch den Gegenstand des Anspruches 1. Die Auflagereinrichtung ist vorzugsweise derart ausgelegt, daß sie neben den Anzugskräften auch die Bremskräfte direkt auf den Drehgestellrahmen des Schienenfahrzeuges überträgt.

Ein Vorteil besteht darin, daß die Funktionen "Auflager für die Bremse an einem ungefederten Rahmenteil" (in Bremsstellung erfolgt in vorteilhafter Weise eine Bremskraftübertragung von der Bremse auf das Drehgestell) und "Führung der Bremse in X- und Y- Richtung" (d.h. in einer Ebene parallel zu den beiden Schienen, auch mit unterschiedlichem Spiel) in einer Baugruppe vereinigt werden. Die Linearbewegungseinrichtungen sind ferner zum Schutz gegen Schmutz und Feuchtigkeit gekapselt ausführbar. Damit wird der Vereisungsgefahr besonders wirksam vorgebeugt.

Weitere besonders vorteilhafte Varianten der Erfindung sind in den Unteransprüchen angegeben.

Nachfolgend wird die Erfindung unter Bezug auf die Zeichnung anhand von Ausführungsbeispielen näher beschrieben, wobei auch weitere Vorteile und Möglichkeiten der Erfindung deutlich werden. Es zeigt:
Fig. 1 und 2 Seitenansichten eines ersten Ausführungsbeispiels einer erfindungsgemäßen Wirbelstrombremse im eingebremsten und im gelösten Zustand;
Fig. 3 und 4 das erste Ausführungsbeispiel der Erfindung als Vergrößerung aus Fig. 1 und 2 im eingebremsten und im gelösten Zustand;
Fig. 5 eine schematische Veranschaulichung eines Nachstellvorganges;
Fig. 6 ein zweites Auflager in Ergänzung des ersten Auflagers aus Fig. 3.

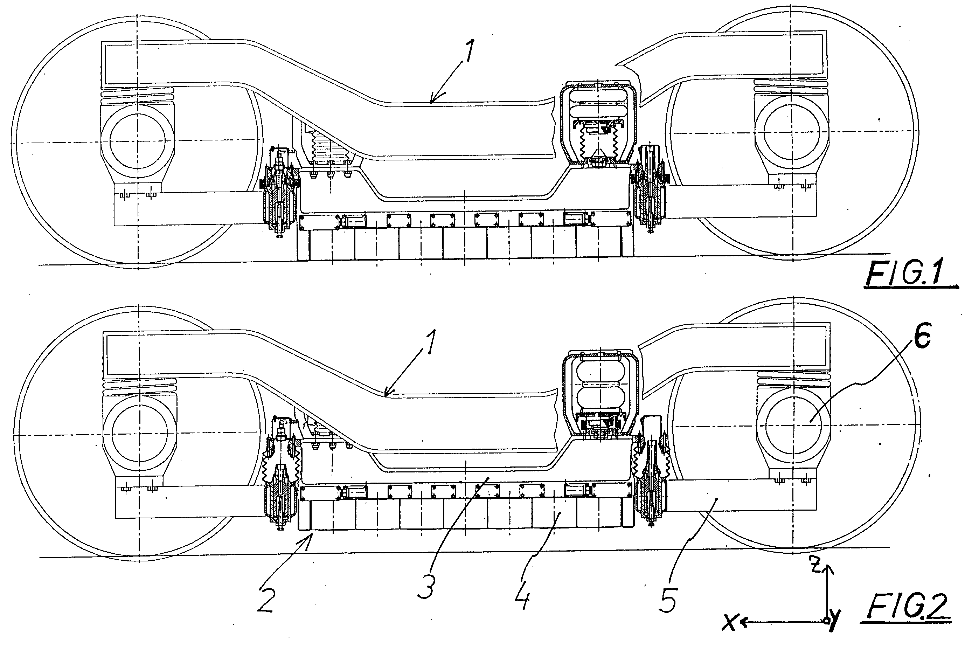

Fig. 1 zeigt eine Seitenansicht eines Drehgestelles 1, an dem eine Wirbelstrombremse 2 angeordnet ist. Die Wirbelstrombremse 2 weist einen Bremsträger 3 auf, an dem Magneten 4 der Wirbelstrombremse befestigt sind. Der Bremsträger 3 ist an seinen Enden verlängert und wird über einen drehgestellfesten Hilfsrahmen (Koppelrahmen) 5 geführt. Der Koppelrahmen 5 ist fest mit den Achslagern 6 des Drehgestelles 1 verbunden.

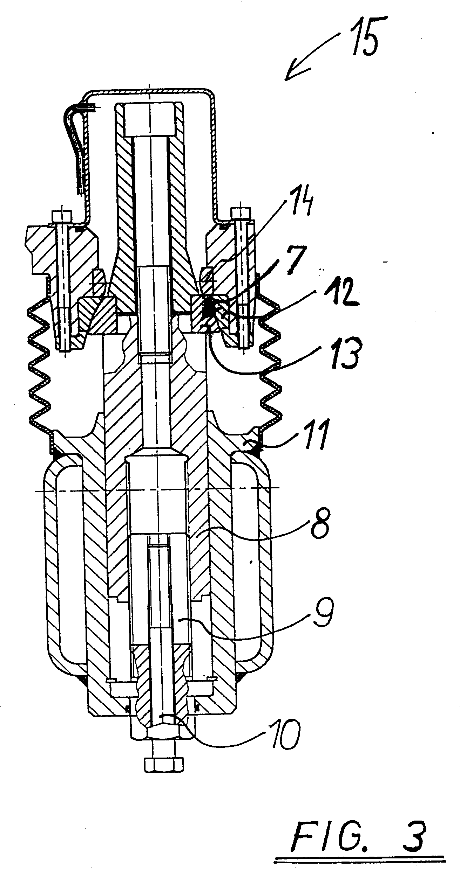

In Bremsstellung (Fig. 1, 3 und 6) stützt sich der Bremsträger 3 über ein erstes Auflager 15 mit einem sphärischen Lager 7 und einer Nachstelleinrichtung (Elemente 8, 9, 10 - s.u.) an einer hilfsrahmenfesten Buchse 11 ab. Damit sind sowohl Brems- als auch Anzugskräfte vom Bremsmagneten auf den Koppelrahmen übertragbar. Ein weiterer Vorteil der sphärischen Abstützung besteht in der Tatsache, daß ein Kantentragen vermieden wird.

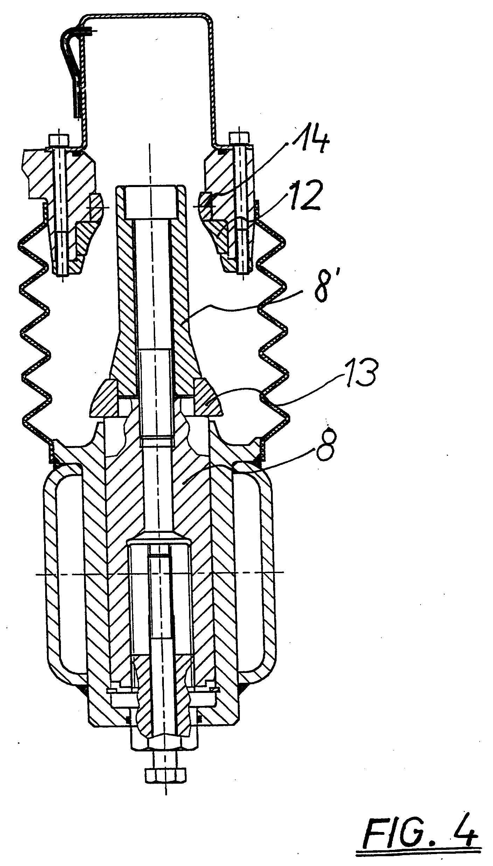

Wird die Bremse in ihre Lösestellung gehoben (Fig. 4), hebt sich ein Lageraußenring 12 von einem Innenring 13 ab, so daß die Masse der Wirbelstrombremse 2 vom Koppelrahmen 5 gelöst ist. Die Zentrierung in der Lösestellung erfolgt am Drehgestellhauptrahmen 1 (also gefedert) . Ein Bolzen 8 (mit Ansatz 8'; der Bolzen gehört ferner auch zur Nachstelleinrichtung) ist so lang gewählt, daß er stets in eine Hülse 14 hineinragt, um die Bremse beim Absenken sicher zu führen bzw. einzuweisen. Der Bolzen 8 verjüngt sich ferner nach oben hin derart, daß die Bremse in der Übergangsstellung zwischen Löse- und Bremsstellung immer mit einem definierten Spiel zum Koppelrahmen 5 und damit zum Achslager 6 geführt ist. Damit wird sichergestellt, daß das Fahrzeugbegrenzungsprofil auch in der Übergangsstellung zwischen Brems- und Lösestellung eingehalten wird und daß andererseits die Masse der Wirbelstrombremse auch in X- und Y-Richtung vom Koppelrahmen weitgehend entkoppelt ist.

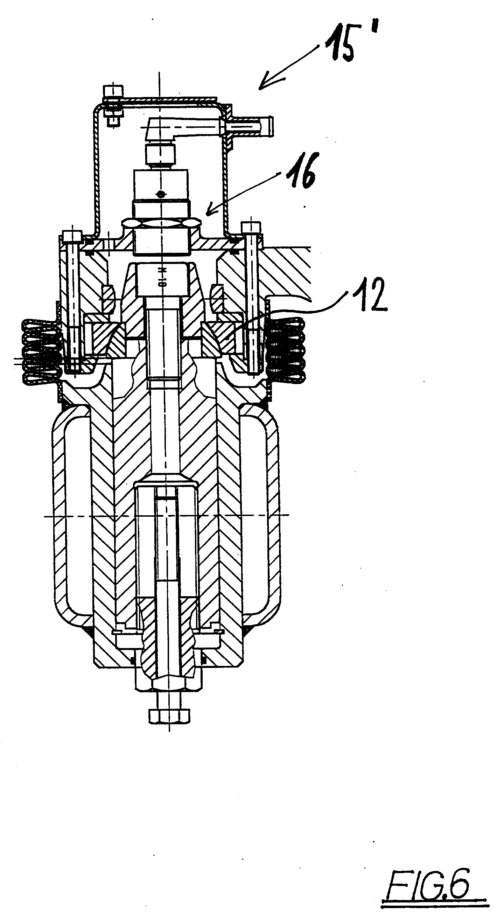

Nach Fig. 6 wird ein zweites Auflager 15' auf der gegenüberliegenden Seite des Bremsmagneten so ausgeführt, daß eine freie Längeneinstellung möglich ist. Im vorliegenden Ausführungsbeispiel wird dies durch ein Spiel am Außenring 12 erreicht. Zusätzlich ist ein Schalter 16 eingebaut, der die Bremsstellung anzeigt.

Ein weiterer Vorteil der Erfindung besteht in der unkomplizierten Möglichkeit zur Nachstellung des Reifenverschleiß durch die Nachstelleinrichtung 8, 9, 10, die durch eine Verstellbarkeit des Auflagers in Z-Richtung erreicht wird. Eine Spindel 9 ist in ihrer Längsrichtung geschlitzt ausgeführt und in der Mitte mit einem konischen Gewinde versehen. Eine Schraube 10 weitet die Spindel 9 beim Einschrauben derart auf, daß die Spindel mit ihrem Außengewinde in dem Bolzen 8 drehfest klemmt. Die Nachstellung wird damit fixiert.

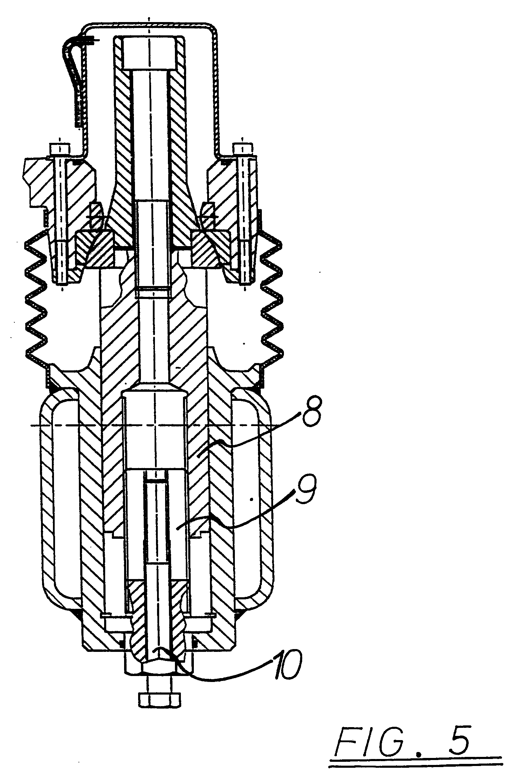

Zum Nachstellen wird die Schraube 10 gelockert und die Spindel 9 so lange nachgedreht, bis der gewünschte Spalt zwischen Schiene und Magnet erreicht ist. Durch Anziehen der Schraube 10 wird die Einrichtung wieder festgeklemmt. Fig. 5 veranschaulicht eine bereits nachgestellte Position.

Bei einer weiteren Variante der Erfindung (nicht dargestellt) könnte der Bolzen 8 auch am Bremsträger befestigt sein und nach unten hin in ein Loch im Koppelrahmen einragen.

Zusammengefaßt kombiniert die Erfindung über die Baugruppe des Auflagers die nachstellbare Abstützung in Z-Richtung und die Zentrierung und Einweisung der Bremse zwischen Brems- und Lösestellung. Das Auflager überträgt neben den Anzugskräften auch die Bremskräfte direkt auf das Rahmenteil. Eine zusätzliche Vorrichtung - z.B. Mitnehmer oder Bremsstütze - kann entfallen. Weitere Vorteile ergeben sich aus der Verjüngung des Bolzens, der winkligen Einstellbarkeit des Auflagers und der Nachstellbarkeit des Anschlages in Z-Richtung.

### Bezugszeichenliste

- Drehgestell: 1
- Wirbelstrombremse: 2
- Bremsträger: 3
- Magnete: 4
- Hilfsrahmen: 5
- Achslager: 6
- sphärisches Lager: 7
- Bolzen: 8, 8'
- Spindel: 9
- Schraube: 10
- hilfsrahmenfeste Buchse: 11
- Lageraußenring: 12
- Lagerinnenring: 13
- Hülse: 14
- erstes, zweites Auflager: 15, 15'
- Schalter: 16

## Patentansprüche

1. Magnetische Bremse, insbesondere lineare Wirbelstrombremse (2) für Schienenfahrzeuge mit wenigstens einem Bremsmagneten (4), die an einem ungefederten Element, insbesondere an den Achslagern (6) des Schienenfahrzeuges, anbringbar und in Richtung der Schiene und von dieser weg bewegbar ist und die ein erstes Auflager (15) aufweist, das als nachstellbare Abstützung sowie als Zentrierungseinrichtung der magnetischen Bremse (2) zwischen Brems- und Lösestellung ausgelegt ist, **dadurch gekennzeichnet,** daß das Auflager (15) ferner einen Bolzen (8) aufweist, der so lang ist, daß er sowohl in Brems- als auch in Lösestellung in eine Hülse (14) ragt, um die Bremse beim Absenken einzuweisen.

2. Magnetische Bremse nach Anspruch 1, dadurch gekennzeichnet, daß das erste Auflager (15) derart ausgelegt ist, daß sie neben den Anzugskräften auch die Bremskräfte direkt auf den Drehgestellrahmen (1) des Schienenfahrzeuges überträgt.

3. Magnetische Bremse nach Anspruch 1 oder 2, dadurch gekennzeichnet, daß ein Bremsträger (3), an dem die Bremsmagnete (4) der magnetischen Bremse (2) befestigt sind, an seinen Enden verlängert und an einen drehgestellfesten Hilfsrahmen (5) geführt ist.

4. Magnetische Bremse nach Anspruch 3, dadurch gekennzeichnet, daß der Hilfsrahmen (5) fest mit Achslagern (6) des Schienenfahrzeuges verbunden ist.

5. Magnetische Bremse nach Anspruch 3 oder 4, dadurch gekennzeichnet, daß der Bremsträger (3) über das erste als sphärisches Lager (7) ausgeführte AufLager (15) und eine Nachstelleinrichtung (8, 9, 10) an einer hilfsrahmenfesten Buchse (11) abgestützt ist.

6. Magnetische Bremse nach einem der Ansprüche 3 bis 5, dadurch gekennzeichnet, daß die Nachstelleinrichtung einen Bolzen (8), eine Spindel (9) und eine Schraube (10) aufweist.

7. Magnetische Bremse nach Anspruch 6, dadurch gekennzeichnet, daß sich der Bolzen (8) verjüngt.

8. Magnetische Bremse nach einem der vorstehenden Ansprüche, dadurch gekennzeichnet, daß ein zweites AufLager (15') auf der anderen Seite der Bremsmagneten (3) derart ausgeführt ist, daß eine freie Längeneinstellung möglich ist.

9. Magnetische Bremse nach einem der vorstehenden Ansprüche, dadurch gekennzeichnet, daß eines der Auflager (15, 15') verstellbar ausgeführt ist.

## Claims

1. Magnetic brake, particularly linear eddy-current brake (2) for rail vehicles, comprising at least one brake magnet (2), which is adapted for being mounted on an unsprung element, specifically at the axle bearings (6) of the rail vehicle, or for being moved along the direction of the rail and away therefrom and which comprises a first supporting means (15) designed as adjustable support as well as centring means of said magnetic brake (2) between a brake application position and a brake release position, **characterised in** that said supporting means (15) includes moreover a bolt (8) having such a length that it projects into a sleeve (14), both in the brake application position and the brake release position, for guiding the brake in lowering.

2. Magnetic brake according to Claim 1, **characterised in** that said first supporting means (15) is so designed that it transmits not only the forces of attraction but also the brake forces directly to the bogie frame (1) of the rail vehicle.

3. Magnetic brake according to Claim 1 or 2, **characterised in** that a brake bracket (3), on which the brake magnets (4) of the magnetic brake (2) are attached, is prolonged at its ends and approached to an ancillary frame (5) integrally mounted on the bogie.

4. Magnetic brake according to Claim 3, **characterised in** that said ancillary frame (5) is fixedly attached on axle bearings (6) of the rail vehicle.

5. Magnetic brake according to Claim 3 or 4, **characterised in** that said brake bracket (3) is supported via said first supporting means (15) designed as spherical bearing (7) and via adjusting means (8, 9, 10) at a sleeve (11) integral with said ancillary frame.

6. Magnetic brake according to any of the Claims 3 to 5, **characterised in** that said adjusting means include a bolt (8), a shaft (9) and a screw (10).

7. Magnetic brake according to Claim 6, **characterised in** that said bolt (8) is tapered.

8. Magnetic brake according to any of the preceding Claims, **characterised in** that a second supporting means (15') on the other side of said brake magnets (3) is designed so as to permit a free adjustment in length.

9. Magnetic brake according to any of the preceding Claims, **characterised in** that one of said supporting means (15, 15') is designed for adjustment.

## Revendications

1. Frein magnétique, en particulier frein à courants de Foucault (2) linéaire pour véhicules sur rails, comprenant au moins un aimant-frein (2), qui est approprié à être monté sur un élément non suspendu à ressort, en particulier aux boîtes d'essieu (6) du véhicule sur rails, ou à être déplacé le long du sens du rail et à s'en écarter, et qui comprend un premier support (15) conçu en tant qu'appui réglable as en tant que moyen de centrage dudit frein magnétique (2) entre une position de freinage et une position de desserrage de frein, **caractérisé en ce** que ledit support (15) comprend également un boulon (8) à une longueur telle qu'il fait saillie dans une douille (14), non seulement en position de freinage mais aussi en position de desserrage de frein, afin de guider le frein en descente.

2. Frein magnétique selon la revendication 1, **caractérisé en ce** que ledit premier support (15) est conçu de façon à transférer non seulement les forces d'attraction mais aussi les efforts de freinage directement au châssis de bogie (1) du véhicule sur rails.

3. Frein magnétique selon la revendication 1 or 2, **caractérisé en ce** qu'une console de frein (3), sur laquelle les aimants-frein (4) du frein magnétique (2) sont montés, est prolongée à ses extrémités, en étant approchée à un châssis secondaire (5) monté sur le bogie de façon intégrale.

4. Frein magnétique selon la revendication 3, **caractérise en ce** que ledit châssis secondaire (5) est fixé sur des boîtes d'essieu (6) du véhicule sur rails.

5. Frein magnétique selon la revendication 3 ou 4, **caractérisé en ce** que ladite console de frein (3) s'appuie va ledit premier support (15), qui est conçu en tant que palier sphérique (7), et via des moyens de rajustage (8, 9, 10) à une douille (11) intégrale fixée sur ledit châssis secondaire.

6. Frein magnétique selon une quelconque des revendications 3 à 5, **caractérisé en ce** que lesdits moyens de rajustage comprennent un boulon (8), une broche (9) et une vis (10).

7. Frein magnétique selon la revendication 6, **caractérisé en ce** que ledit boulon (8) se réduit en cône.

8. Frein magnétique selon une quelconque des revendications précédentes, **caractérisé en ce** qu'un deuxième support (15') de l'autre côté desdits aimants-frein (3) est conçu de façon à permettre l'ajustage libre de la longueur.

9. Frein magnétique selon une quelconque des revendications précédentes, **caractérisé en ce** qu'un desdits supports (15, 15') est conçu à être rajusté.
